(19) Europäisches Patentamt
European Patent Office
Office européen des brevets

(11) Veröffentlichungsnummer: **0 002 019**
**A1**

# (12) EUROPÄISCHE PATENTANMELDUNG

(21) Anmeldenummer: **78101315.6**

(51) Int. Cl.²: **C 07 F 7/22**

(22) Anmeldetag: **04.11.78**

(30) Priorität: **14.11.77 CH 13867/77**

(43) Veröffentlichungstag der Anmeldung: **30.05.79**
**Patentblatt 79/11**

(84) Benannte Vertragsstaaten: **BE DE FR GB NL**

(71) Anmelder: **CIBA-GEIGY AG, Patentabteilung Postfach, CH-4002 Basel (CH)**

(72) Erfinder: **Otto, Eberhard, Dr., Buchwaldstrasse 32, D-6145 Lindenfels (DE)**
Erfinder: **Wehner, Wolfgang, Dr., Wetzbach 34, D-6144 Zwingenberg (DE)**
Erfinder: **Wirth, Hermann O., Dr., Lessingstrasse 24, D-6140 Bensheim 3 (DE)**

## (54) Verfahren zur Herstellung von Organozinnverbindungen.

(57) Verfahren zur Herstellung von Organozinnverbindungen der Formel (I)

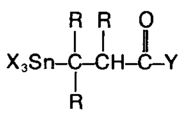

(I),

worin

X ein Chlor-, Brom- oder Jodatom ist,

R unabhängig voneinander ein Wasserstoffatom oder Alkyl ist, und

Y OH, $NH_2$ oder OR′ bedeutet, worin

R′ eine gegebenenfalls eine funktionelle Gruppe enthaltende Kohlenwasserstoffgruppe aliphatischen, cycloaliphatischen oder aromatischen Charakters darstellt,

durch die direkte Umsetzung eines Zinndihalogenides mit einem ungesättigten Nitril der Formel (II)

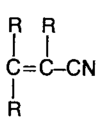

(II),

worin R die zuvor angegebene Bedeutung hat, und Chlor-, Brom- oder Jodwasserstoff, dadurch gekennzeichnet, daß man die Reaktion in Gegenwart von Wasser, einer Carbonsäure oder Wasser und Alkohol oder mindestens 3 Mol Alkohol pro Mol Nitril durchführt.

EP 0 002 019 A1

3-11447/CGM 192/+

Verfahren zur Herstellung von Organozinnverbindungen.

Die vorliegende Erfindung betrifft ein Verfahren zur Herstellung von carbofunktionellen Organozinnverbindungen.

Organozinnverbindungen geniessen ein erhebliches wirtschaftliches Interesse als Stabilisatoren für halogenhaltige Thermoplaste. In letzter Zeit sind hierbei auch carbofunktionelle Organozinnverbindungen vorgeschlagen worden. Zur Herstellung solcher Stabilisatoren gibt es verschiedene Möglichkeiten.

So ist zum Beispiel in der DT-OS 1 963 569 allgemein beschrieben, dass Halogenzinnsäure in Gegenwart polarer Lösungsmittel mit Olefinen reagiert, wobei das Olefin funktionelle Gruppen enthalten kann. Als Beispiel wird Acrylnitril genannt. Es wurde jedoch gefunden, dass bei dieser Umsetzung die gewünschte Verbindung in nur unzureichenden Ausbeuten erhalten wird. Ausserdem treten bei

diesem Verfahren unerwünschte Nebenreaktionen ein.

Auch nach einem in der DT-OS 2 540 210 vorgeschlagenen Verfahren sind Monoorganozinnverbindungen zugänglich. Ihre Darstellung erfolgt über die Umsetzung von Zinndihalogenid mit Halogenwasserstoff und einem entsprechenden Olefin. Das hierin beschriebene Verfahren ist aber auf solche Olefine beschränkt, die eine Carbonylgruppe in Konjugation zur Doppelbindung enthalten. Dieses Verfahren lässt sich nicht ohne weiteres auf andere substituierte Vinylverbindungen übertragen, z.B. Nitrile.

Es besteht jedoch das Interesse nach wirtschaftlichen Herstellungsverfahren von Monoorganozinnderivaten unter Verwendung leicht zugänglicher Ausgangsverbindungen, wie z.B. Acrylnitril.
Aufgabe der vorliegenden Erfindung war es, ein wirtschaftliches Verfahren zur Herstellung carbofunktioneller Organozinnverbindungen bereitzustellen.

Gegenstand vorliegender Erfindung ist ein Verfahren zur Herstellung von Organozinnverbindungen der Formel I

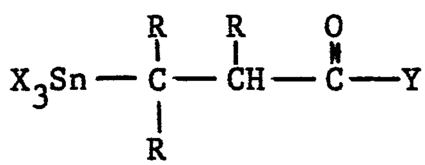

(I) ,

worin
X ein Chlor-, Brom- oder Jodatom ist.
R unabhängig voneinander ein Wasserstoff oder Alkyl ist, und
Y OH, $NH_2$ oder OR' bedeutet, worin
R' eine gegebenenfalls eine funktionelle Gruppe enthaltende Kohlenwasserstoffgruppe aliphatischen, cycloaliphatischen oder aromatischen Charakters darstellt,

durch die direkte Umsetzung eines Zinndihalogenides mit einem ungesättigten Nitril der Formel II

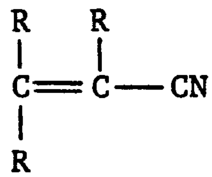 (II) ,

worin R die zuvor angegebene Bedeutung hat und Chlor-, Brom- oder Jodwasserstoff, dadurch gekennzeichnet, dass man die Reaktion in Gegenwart von Wasser, einer Carbonsäure oder Wasser und Alkohol oder mindestens 3 Mol Alkohol pro Mol Nitril durchführt.

X bedeutet aus überwiegend wirtschaftlichen Gründen ein Chloratom. R ist vorzugsweise Wasserstoff und/oder Alkyl mit 1 bis 4 C-Atomen, insbesondere Wasserstoff und/oder Methyl, wobei sich diese Bevorzugung durch die leicht zugänglichen Nitrile Acrylnitril, Methacrylnitril, Crotonnitril und β-Dimethylacrylnitril ergibt.

R' als Kohlenwasserstoffgruppe kann hierbei sein, lineares oder verzweigtes Alkyl, gegebenenfalls substituiertes Cycloalkyl, Cycloalkylalkyl, Aryl und Aralkyl, wobei der Substituent bevorzugt Alkyl ist, das funktionelle Gruppen enthalten kann. Cycloalkyl ist bevorzugt Cyclohexyl, Aryl gleich Phenyl und Aralkyl gleich Benzyl. R' enthält bevorzugt 1 bis 12 C-Atome und stellt insbesondere als bevorzugte Untergruppe Cycloalkyl oder lineares oder verzweigtes Alkyl dar.

Sofern R' mit funktionellen Gruppen substituiert ist, sind diese z.B. Hydroxy, Mercapto, Alkoxy, Alkylthio, Carboxy und Alkoxycarbonyl.

Beispiele für R' sind:
Methyl, Aethyl, n- oder i-Propyl, n-, i- und t-Butyl, Pentyl, Hexyl, Heptyl, 2-Hexyl, 3-Heptyl, Octyl, 2-Aethylhexyl, Nonyl, Decyl, Undecyl, Dodecyl, Cyclopentyl, Cyclohexyl, Methylcyclohexyl, Cyclohexylmethyl, Methylcyclohexylmethyl, Phenyl, Methylphenyl, Aethylphenyl, Butylphenyl, Octylphenyl, Naphthyl, Benzyl, Methylbenzyl, Octylbenzyl, α- oder β-Phenyläthyl.

Beispiele für R' mit funktionellen Gruppen sind:

β-Hydroxyäthyl, β-Mercaptoäthyl, Methoxyäthyl, Butoxyäthyl, Octoxyäthyl, Methylthioäthyl, Propylthioäthyl, Methoxycarbonyl, β-Aethoxycarbonyl sowie Alkoxycarbonyalkyl, z.B. Methoxycarbonylmethyl, Aethoxycarbonylpropyl, Butoxycarbonyläthyl, Dodecyloxycarbonylmethyl.

Unter den erfindungsgemäss eingesetzten Carbonsäuren sind jene bevorzugt, die 1 bis 12 C-Atome aufweisen; sie können auch aromatisch sein, wie z.B. Benzoesäure. Besonders bevorzugt sind jene Carbonsäuren, die leichtflüchtig sind bzw. leichtflüchtige Säurehalogenide bilden, wie Propionsäure, Essigsäure und besonders Ameisensäure.

Bei dem erfindungsgemässen Herstellungsverfahren kann das Zinndihalogenid in verschiedener Form eingesetzt werden, z.B. als aufgeschmolzenes wasserfreies Salz in Form von Schuppen oder Blättchen oder als getrocknetes Salz in Pulver- oder Staubform. Weiter ist es möglich, die Reaktion im überschüssigen Reaktanden (Alkohol, Säure, Wasser und/oder Nitril) oder einem zusätzlichen Lösungsmittel durchzuführen. Geeignete Lösungsmittel sind hierbei inerte Lösungsmittel

wie z.B. solche mit Aether-, Carbonsäureester-, Keto- oder Sulfonfunktionen oder Kohlenwasserstoff sowie halogenierte Kohlenwasserstoffe, z.B. Methylenchlorid oder Chloroform und auch Säureamide wie z.B. Dimethylformamid. Die Esterfunktion enthält zur Vermeidung von Umesterungen vorteilhaft den Rest eines Alkohols, der auch als Reaktand eingesetzt wird.

Bei der erfindungsgemässen Umsetzung ist es als wesentlich anzusehen, dass neben dem ungesättigten Nitril, Wasser, eine Carbonsäure oder Wasser und Alkohol vorzugsweise in mindestens molarem Verhältnis vorliegt. Es kann aber auch ein geringer Unterschuss des Nitrils vorliegen.

Setzt man das ungesättigte Nitril und Wasser im molaren Verhältnis von etwa 1:1 bis 1:2 ein, so erhält man Zinnhalogenide, worin Y in der Formel I $NH_2$ bedeutet. Diese Zinnhalogenide mit Säureamidfunktion werden auch gebildet, wenn man Nitril und Carbonsäure mindestens im molaren Verhältnis 1:1 einsetzt, wobei das entsprechende Carbonsäureanhydryd bzw. Carbonsäurehalogenid oder CO bei Verwendung von Ameisensäure entsteht, die aus dem Reaktionsgemisch entfernt werden.

Setzt man das ungesättigte Nitril und Wasser (auch in Form von wässriger HCl) im molaren Verhältnis von grösser als 1:2 ein, so erhält man Zinnhalogenide mit Carbonsäurefunktion (Y = OH). Setzt man das ungesättigte Nitril, Wasser und Alkohol im molaren Verhältnis 1:1:1 ein, so erhält man Zinnhalogenide mit einer Carbonsäureesterfunktion (Y =OR'), die im übrigen auch erhalten werden, wenn man das ungesättigte Nitril und Alkohol im molaren Verhältnis von mindestens 1:3 einsetzt. Diese letztgenannte Variante wird vorzugsweise mit niederen Alkoholen durchgeführt, um entsprechend leichflüchtige Aether

bzw. Halogenkohlenwasserstoffe zu erhalten, die bei dieser Reaktion gebildet werden. Vorzugsweise werden aliphatische oder cycloaliphatische Alkohole mit 1 bis 12, besonders 1 bis 6 C-Atomen eingesetzt. Es können hierbei auch Phenole, besonders Alkylphenole Verwendung finden.

Die Reaktionstemperatur beträgt im allgemeinen -30 bis 100° C, vorzugsweise 20 bis 50° C. Die Reaktion wird vorteilhaft unter Normaldruck oder geringem Ueberdurck durchgeführt.

Im einzelnen wird so verfahren, dass das Zinndihalogenid und die Reaktanden mit oder ohne Lösungsmittel vorgelegt werden und der Halogenwasserstoff (vorzugsweise HCl) eingeleitet wird.

Es ist aber auch möglich, das Zinndihalogenid im Lösungsmittel vorzulegen und die Reaktanden und Halogenwasserstoffgas gleichzeitig zuzugeben. In diesem Fall ist es vorteilhaft, nach dem Gegenstromprinzip zu arbeiten, wobei auch eine kontinuierliche Verfahrensfürhung möglich ist.

In einer weiteren Ausführungsform kann stufenweise vorgegangen werden, indem man zunächst in einem geeigneten Lösungsmittel Trichlorstannan herstellt und danach mit dem ungesättigten Nitril in Gegenwart eines Alkoholes umsetzt. Das Trichlorstannan kann hierbei durch die Einwirkung von Halogenwasserstoff auf Zinndihalogenid oder Zinn in polaren Lösungsmitteln, besonders Aethern, erzeugt werden.

Mit dem erfindungsgemässen Verfahren werden überraschend wertvolle Organozinnverbindungen auf einfache Weise wirtschaftlich in hohen Ausbeuten und unter sehr milden Reaktionsbedingungen erhalten, wobei leicht zugängliche und

billige Rohstoffe als Ausgangsmaterialien verwendet werden können. Bei der Reaktion wird das eingesetzte Zinn(II)-halogenid überraschend weitgehend in die gewünschten Organozinnverbindungen umgewandelt.

Die erfindungsgemäss hergestellten Organozinnverbindungen können verwendet werden als Biozide oder Katalysatoren für die Polyurethanherstellung. Besonders geeignet sind sie jedoch als Zwischenprodukte für Organozinnstabilisatoren, mit denen halogenhaltige Thermoplaste stabilisiert werden. Weitere Einzelheiten hierzu sind in der DT-OS 2 607 178 und der DT-OS 2 540 210 beschrieben.

Die nachfolgenden Beispiele dienen der näheren Erläuterung der Erfindung. Teile bedeuten hierin Gewichtsteile.

Beispiel 1

In eine Mischung aus 37,9 Teilen trockenem Zinndichlorid. 10,6 Teilen Acrylnitril, 70 Teilen absolutem Aethanol wird HCl-Gas eingeleitet. Die Gaszufuhr ist so geregelt dass sich eine Reaktionstemperatur von 40 bis 50° C einstellt. Die Zeit bis zur HCl-Sättigung beträgt 4 Stunden. Nach Abziehen der flüchtigen Bestandteile im Vakuum wird ein kristallines Produkt erhalten, das gemäss $^1$HMR-Spektrum hauptsächlich aus $Cl_3SnCH_2CH_2C(=O)-OC_2H_5$ besteht.

Die Reaktion verläuft wahrscheinlich nach folgender Bruttogleichung:

$$SnCl_2 + CH_2{=}CH\text{-}CN + 2\ HCl + 3\ C_2H_5OH \longrightarrow Cl_3SnCH_2CH_2C(=O)\text{-}OC_2H_5 + NH_4Cl + (C_2H_5)_2O\ .$$

Beispiel 2

In einem Vierhalskolben mit Rührer, Rückflusskühler, Thermometer und Gaseinleitrohr werden 190 Teile Zinn(II)chlorid wasserfrei und 74 Teile n-Butanol vorgelegt. Unter Rühren wird bei 40° C ein Strom trockenen HCl-Gases eingeleitet und gleichzeitig eine Lösung von 53 Teilen Acrylnitril und 18 Teilen Wasser in 200 Teilen n-Butanol zugetropft. Nach 5 Stunden wird das durch Verseifen des Nitrils entstandene Ammoniumchlorid abfiltriert. Aus dem Filtrat wird überschüssiges n-Butanol abdestilliert. Es werden 348 Teile der Monoorganozinnverbindung $Cl_3SnCH_2CH_2COOC_4H_9$ erhalten.

## Beispiel 3

In einem Dreihalskolben mit Rührer. Rückflusskühler und Blasenzähler werden bei 20° C 37,9 Teile wasserfreies Sn(II)chlorid, 10,6 Teile Acrylnitril und 9,2 Teile Ameisensäure in 70 Teilen Chloroform vorgelegt. Unter Rühren leitet man Chlorwasserstoffgas durch die Mischung, das so zudosiert wird, dass die Temperatur 40° C nicht übersteigt. Nach etwa 3 Stunden ist Cl-Sättigung eingetreten. Die klare Lösung wird im Vakuum von flüchtigen Bestandteilen befreit. Im verbleibenden trockenen, kristallinen Rückstand (496 Teile) lässt sich $^1$HMR-spektroskopisch der Nachweis für das Vorliegen von $Cl_3SnC_2H_4\underset{\overset{\|}{O}}{C}-NH_2$ führen.

Durch Extraktion mit Chloroform lassen sich Verunreinigungen entfernen, sodass schliesslich ein analysenreines Produkt erhalten wird.
Schmelzpunkt: 193 bis 194° C.
Die Reaktion verläuft nach der Gleichung

$$SnCl_2 + CH_2{=}CH\text{-}CN + HCOOH + HCl \longrightarrow Cl_3SnCH_2CH_2\text{-}\overset{\overset{O}{/\!/}}{C}\text{-}NH_2 + CO$$

## Beispiel 4

Bei einer Reaktion gemäss Beispiel 3 werden anstelle von Ameisensäure 3,6 Teile $H_2O$ und 70 Teile Dimethoxyäthan als Lösungsmittel eingesetzt. Die Reaktionszeit ist 3 Stunden und die Reaktionstemperatur 35° C. Nach Abziehen der flüchtigen Bestandteile verbleibt ein fester Rückstand, der nach Waschen mit Chloroform reines $Cl_3SnC_2H_4\text{-}\underset{\overset{\|}{O}}{C}\text{-}NH_2$ ergibt.

Beispiel 5:

In der Apperatur gemäss Beispiel 3 werden 37,9 Teile trockenes Zinn-II-chlorid und 10,6 Teile Acrylnitril in 100 Teilen konzentrierter HCl vorgelegt. Dann leitet man bis zur Sättigung (ca. 4. Stunden) HCl-Gas ein, wobei die Temperatur bis auf etwa 50°C steigt. Danach werden im Hochvakuum die flüchtigen Bestandteile entfernt. Es verbleibt ein wachsartiger Rückstand, der gemäss dem NMR-Spektrum $Cl_3SnC_2H_4COOH$ ist (Chem. Verschiebung des Carboxyl-Protons gegen TMS in deuteriertem DMSO ist 5,4 ppm). $Sn^{II}$ kann nicht nachgewiesen werden, was bedeutet, dass $SnCl_2$ quantitativ zur gewünschten Organozinnverbindung reagiert hat.

Zur Herstellung carboxylgruppenhaltiger Organozinnhalogenide wird bevorzugt in konzentrierter HCl als Reaktionsmedium gearbeitet. Das Arbeiten in wasserhaltigen organischen Lösungsmitteln ist auch möglich.

Patentansprüche

1. Verfahren zur Herstellung von Organozinnverbindungen der Formel I

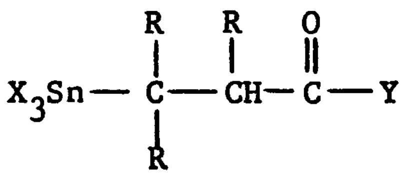 (I) ,

worin X ein Chlor-, Brom- oder Jodatom ist,
R unabhängig voneinander ein Wasserstoffatom oder Alkyl ist,
und Y OH, $NH_2$ oder OR' bedeutet, worin
R' eine gegebenenfalls eine funktionelle Gruppe enthaltende Kohlenwasserstoffgruppe aliphatischen, cycloaliphatischen oder aromatischen Charakters darstellt,

durch die direkte Umsetzung eines Zinndihalogenides mit einem ungesättigten Nitril der Formel II

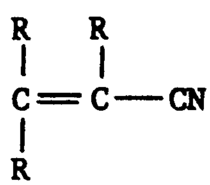 (II) ,

worin R die zuvor angegebene Bedeutung hat, und Chlor-, Brom- oder Jodwasserstoff, dadurch gekennzeichnet, dass man die Reaktion in Gegenwart von Wasser, einer Carbonsäure oder Wasser und Alkohol oder mindestens 3 Mol Alkohol pro Mol Nitril durchführt.

2. Verfahren gemäss Anspruch 1, dadurch gekennzeichnet, dass X ein Chloratom darstellt.

3. Verfahren gemäss Anspruch 1, dadurch gekennzeichnet, dass R ein Wasserstoffatom oder Alkyl mit 1 bis 4 C-Atomen, insbesondere Methyl ist.

4. Verfahren gemäss Anspruch 1, dadurch gekennzeichnet, dass die Kohlenwasserstoffgruppe R' 1 bis 12 Kohlenstoffatome enthält.

5. Verfahren gemäss Anspruch 1, dadurch gekennzeichnet, dass R' als funktionelle Gruppen Hydroxy, Mercapto, Alkoxy, Alkylthio, Carboxy und Alkoxycarbonyl enthält.

6. Verfahren gemäss Anspruch 4, dadurch gekennzeichnet, dass die Kohlenwasserstoffgruppe R' lineares oder verzweigtes Alkyl oder Cycloalkyl ist.

7. Verfahren gemäss Anspruch 1, dadurch gekennzeichnet, dass das ungesättigte Nitril Acryl-, Methacryl-, Croton- oder β-Dimethylacrylnitril ist.

8. Verfahren gemäss Anspruch 1, dadurch gekennzeichnet, dass die Umsetzung ohne oder in Gegenwart eines inerten Lösungsmittels mit bevorzugt Halogen-, Aether-, Carbonsäureester- oder Sulfonfunktion durchgeführt wird.

9. Verfahren gemäss Anspruch 1, dadurch gekennzeichnet, dass der Alkohol und/oder das Nitril im Ueberschuss als Lösungsmittel verwendet wird.

10. Verfahren gemäss Anspruch 1, dadurch gekennzeichnet, dass das molare Verhältnis von Nitril zu Alkohol mindestens etwa 1:3, von Nitril zu Wasser mindestens etwa 1:1 bis etwa 1:2, von Nitril:Wasser:Alkohol etwa 1:1:1 und von Nitril zu Carbonsäure mindestens etwa 1:1 beträgt.

11. Verfahren gemäss Anspruch 1, dadurch gekennzeichnet, dass die Umsetzung bei einer Temperatur von -30 bis 100° C, vorzugsweise 20 bis 50° C und vorzugsweise Normaldruck oder leichtem Ueberdruck durchgeführt wird.

12. Verfahren nach Anspruch 1, dadurch gekennzeichnet, dass man Zinndichlorid mit Acrylnitril, n-Butanol, Wasser und Chlorwasserstoff umsetzt zu β-n-Butoxycarbonyläthylzinntrichlorid.

0002019

Europäisches Patentamt

# EUROPÄISCHER RECHERCHENBERICHT

Nummer der Anmeldung
EP 78 10 1315

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | DE - A - 2 540 210 (AKZO GmbH)<br>* Seite 12, Anspruch 1; Seite 13, Ansprüche 2-4 *<br>-- | 1-7 |
| | CHEMICAL ABSTRACTS, Vol. 86, 121463n, 1977<br>Columbus, Ohio, USA,<br>R.E. HUTTON et al. "Synthesis of novel substituted alkyltin halides"<br>Seite 560<br>& Adv.Chem.Ser. 1976, 157,123-33<br>* Zeilen 4-8 *<br>-- | 1-7 |
| | US - A - 3 332 970 (GEORGE SMITH)<br>* Spalte 12, Anspruch 8; Spalte 4, Zeilen 55-72; Spalte 5, Zeilen 20-53 *<br>---- | 1-12 |

KLASSIFIKATION DER ANMELDUNG (Int.Cl.²)

C 07 F 7/22

RECHERCHIERTE SACHGEBIETE (Int. Cl.²)

C 07 F 7/22

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. übereinstimmendes Dokument

X *Der vorliegende Recherchenbericht wurde für alle Patentansprüche erstellt.*

| Recherchenort | Abschlußdatum der Recherche | Prüfer |
|---|---|---|
| Den Haag | 19-02-1979 | SUTER |